# EUROPÄISCHE PATENTSCHRIFT

(11) **EP 3 569 585 B1**
(45) Veröffentlichungstag und Bekanntmachung des Hinweises auf die Patenterteilung: **05.08.2020**
(21) Anmeldenummer: 18172368.5
(22) Anmeldetag: 15.05.2018
(51) Int. Cl.: A01G 24/27, C05F 11/00

(54) **HAFERKLEIE ALS ZUSCHLAGSSTOFF ODER HAUPTBESTANDTEIL VON PFLANZENSUBSTRATEN**
OAT BRAN AS ADDITIVE OR MAIN COMPONENT OF PLANT SUBSTRATES
SON D'AVOINE EN TANT QU'ADJUVANT OU COMPOSANT PRINCIPAL DE SUBSTRATS VÉGÉTAUX

(43) Veröffentlichungstag der Anmeldung: 20.11.2019
(73) Patentinhaber: Humusan Erdenwerk, 48155 Münster (DE)
(72) Erfinder: Meyer, Marcus, 48155 Münster (DE)
(74) Vertreter: Engelhard, Markus

(56) Entgegenhaltungen:
- EP-A2- 1 160 226
- CN-A- 104 522 761
- DE-A1-102007 059 186
- DE-T5-112012 001 398

## Beschreibung

Die vorliegende Erfindung bezieht sich auf die Verwendung von Haferkleie als Zuschlagsstoff oder Hauptbestandteil von Pflanzensubstraten, insbesondere Erden, Blumenerden, Komposten und Spezialerden gemäß Anspruch 1. Die vorliegende Erfindung bezieht sich weiterhin auf ein Verfahren gemäß Anspruch 7 zur Herstellung von Pflanzensubstraten sowie auf die dabei hergestellten Produkte. Die vorliegende Erfindung bezieht sich weiterhin auf Pflanzensubstrate gemäß Anspruch 11, umfassend Haferkleie als Zuschlagsstoff oder Hauptbestandteil, wobei das Pflanzensubstrat Erde, Blumenerde, oder Spezialerde ist.

### Hintergrund der Erfindung

Erde besteht aus organischen und mineralischen Bestandteilen. Der organische Bestandteil ist zumeist Humus, der im Laufe der Zeit durch Mikroorganismen zersetzt wird. Zu den mineralischen Bestandteilen zählen Sand, Schluff und Salze (wie Kalzium-, Magnesium-, Phosphor- oder Eisensalze).

Blumenerde bezeichnet ein für den Hobbygärtner, Pflanzenliebhaber und Profianwender industriell hergestelltes humusreiches Substrat. Dieses soll das schnelle und gesunde Wachstum der eingesetzten Pflanzen sicherstellen.

Im Handel erhältliche Blumenerde ist in der Regel ein aus Torf, Kalk, Düngemitteln und Zuschlagstoffen hergestelltes Kultursubstrat. Die Hersteller verwenden zunehmend auch Kompost, Holzfasern, Rindenhumus und wegen des wachsenden Preisdrucks Recycling-Material aus diversen Quellen. Blumenerden, in denen der Torf ganz oder teilweise durch andere Stoffe ersetzt wird, werden entsprechend als "torffrei" oder "torfreduziert" beworben. Dies geschieht vor dem Hintergrund des aus ökologischer Sicht problematischen Torfabbaus. Allerdings muss berücksichtigt werden, dass die alternativen Zuschlagstoffe mengenmäßig nicht ausreichen, um einen kompletten Torfersatz im Hobby- und Profibereich zu gewährleisten. Zumal die Qualitäten nicht immer entsprechend gut sind und durch die Konkurrenz der regenerativen Energien auch viele Torfersatzstoffe in die Verbrennung zwecks Energiegewinnung gehen. Blumenerden enthalten in der Regel eine ausgewogene Erstversorgung eines NPK-Düngers, der nach einiger Zeit durch Düngergaben ersetzt werden muss.

EP 1 160 226 A2 beschreibt ein Verfahren zur Herstellung von torfähnlichen Bodenhilfsstoffen aus Zellulose-haltigem Material, wie Altpapier oder Zellstoff.

DE 10 2007 059186 A1 betriff einen Pressling aus Zellstoff, der einen Superabsorber aufweist. Die Presslinge sind für die Begrünung oder Rekultivierung bestimmt oder werden als Futtermittel verwendet.

DE 11 2012 001398 T5 beschreibt Düngemittelkörner und Verfahren zur Herstellung von Düngemittelkörnern. Eine Düngemittelzusammensetzung umfasst ein Phosphat-Basismaterial, mindestens einen Mikronährstoff oder einen sekundären Nährstoff, und ein faserförmiges Material, welches Zellulosefasern aus Zellstoff oder Papierschlamm umfassen kann.

CN 104 522 761 A betrifft ein Nahrungsergänzungsmittel, insbesondere zu verwenden gegen Fettleibigkeit.

Der vorliegenden Erfindung liegt die Aufgabe zugrunde, Erden und entsprechende Pflanzensubstrate zur Verfügung zu stellen, die Recycling-Material verwenden, um den Torfgehalt zu reduzieren und weiterhin die Eigenschaften der Pflanzensubstrate zu verbessern.

### Erfindungsgemäße Zuschlagstoffe für Pflanzensubstrate

Die Aufgabe wird durch die Gegenstände der Ansprüche gelöst.

Die Aufgabe wird erfindungsgemäß durch die Verwendung von *Haferkleie* als Zuschlagsstoff oder Hauptbestandteil von Pflanzensubstraten gelöst.

"Pflanzensubstrate" umfassen insbesondere Erden, Blumenerden, Komposte und Spezialerden.

"Pflanzensubstrate", wie hierin verwendet, bezieht sich auf Zusammensetzungen, die zur Kultur bzw. zum Wachstum von Pflanzen verwendet werden.

Typische Bestandteile für Pflanzensubstrate sind Rindenhumus, Kompost, Holzfasern, Kokosgries, Torf, Kalk, Düngemittel.

"Blumenerde", wie hierin verwendet, bezieht sich auf Pflanzensubstrate im Sinne der Erfindung, die zur Kultur bzw. zum Wachstum von Blumen verwendet werden. Zu den Blumenerden gehören zum Beispiel Balkonpflanzenerde, Zimmerpflanzenerde, Kübelpflanzenerde, Gartenerde.

"Spezialerde", wie hierin verwendet, bezieht sich auf Pflanzensubstrate, die zur Kultur bzw. zum Wachstum von bestimmten Pflanzen und Blumen verwendet werden und daher entsprechend bestimmte Bestandteile enthalten, die die bestimmten Pflanzen und Blumen als Nährstoffe benötigen (wie Salze, Mineralien, einen bestimmten pH-Wert etc). Zu den Spezialerden gehören zum Beispiel Kakteenerde, Orchideenerde, Palmenerde, Rosenerde, Geranienerde, Tomatenerde, Bonsaierde, Kräutererde, Tomaten- und Gemüseerde, Rhododendronerde, Buchsbaumerde.

"Kompost", wie hierin verwendet, bezieht sich auf das durch Verrottung erzeugte Produkt aus Küchen- und Gartenabfällen, Bioabfall und Grünschnitt.

Die erfindungsgemäße Zugabe bzw. Verwendung von Haferkleie dient zum einen der Reduzierung des Torfgehalts.

"Torf", wie hierin verwendet, bezieht sich auf ein organisches Sediment, das in Mooren entsteht. Im getrockneten Zustand ist der Torf brennbar. Er bildet sich aus der Ansammlung nicht oder nur unvollständig zersetzter pflanzlicher Substanz und stellt die erste Stufe der Inkohlung dar. Ab einem Gehalt an organischer Substanz von 30 Prozent (Rest: Wasser und Mineralien) heißt die Ablagerung Torf; Gehalte unter 30 Prozent werden als Feuchthumus oder (etwas veraltet) als Moorerde bezeichnet.

Die natürlichen Bestände von Torf gehen zurück. So sind die Vorräte in Norddeutschland bereits erschöpft, so dass derzeit Torf, der aus dem Baltikum importiert wird, verwendet wird. Die Zugabe bzw. Verwendung anderer Materialien und Rohstoffe, die in großen Mengen vorhanden und verfügbar sind, stellt dabei eine Lösung der erfindungsgemäßen Aufgabe dar.

Wie oben ausgeführt, wird die Aufgabe erfindungsgemäß durch die Verwendung von Haferkleie als Zuschlagsstoff oder Hauptbestandteil von Pflanzensubstraten gelöst.

Bevorzugt wird der Zellstoff in Form von Zellstofffasern verwendet.

Bevorzugt wird der Zellstoff aus Recycling-Material verwendet, weiter bevorzugt aus aufbereitetem Altpapier oder nicht bedrucktem Zeitungspapier.

Bevorzugt wird der Zellstoff aus Frischholz, wie aus Holzfasern, verwendet.

Der Zellstoff, insbesondere die Zellstofffasern können aus aufbereitetem Altpapier gewonnen werden. Der so gewonnene Zellstoff bzw. die so gewonnenen Zellstoffasern weisen kurze Fasern im Bereich von einigen wenigen Mikrometern bis in den Submillimeterbereich auf. Dies hat zur Folge, dass dieses Material zum Verklumpen neigt, insbesondere beim Aussetzen gegenüber Feuchtigkeit. Erfindungsgemäß wird dieses Zellstoffmaterial in Blumenerden etc. verwendet, um u.a. eine verbesserte Feuchtigkeitsspeicherkapazität zu erzielen.

Die Feuchtigkeitsspeicherkapazität ist besser gewährleistet, je langfaseriger das verwendete Zellstoffmaterial sei. Nur dann kann gewährleistet werden, dass zwischen den Fasern genügend Zwischenräume und damit eine gewisse "Luftigkeit" erzielt wird, in der Feuchtigkeit gespeichert werden kann.

Bevorzugt wird die Haferkleie in Form von Haferschälkleie verwendet.

Weiterbevorzugt in Form von Haferschälkleie, die durch Zerreiben und/oder Zerkleinern aus Haferschälkleie-Pellets erhalten wird.

Bei der Haferschälkleie handelt es sich um ein Nebenerzeugnis, das bei der Herstellung von Haferkernen aus gereinigtem entpelzten Hafer entsteht und das überwiegend aus Teilen der Schale, Spelzen und Anteilen des Endosperms besteht.

Bei den Haferschälkleie-Pellets handelt es sich bevorzugt um zerkleinerte und als Pellets verpresste Haferschälkleie. Die Masse an Haferschälkleie kann durch Dampf und Druck geschmeidig gemacht und mittels Matrizen in Form gepresst werden.

Der Vorteil bei der Verwendung der Haferschälkleie in Form von Pellets liegt u.a. bei der geringen Restfeuchte der Pellets, wenn diese bei der Herstellung getrocknet werden.

In einer Ausführungsform wird eine Kombination aus Zellstoffmaterial und Haferkleie zugegeben, wobei das Zellstoffmaterial für den nötigen Feuchtigkeitsspeicher sorgt und die Haferkleie (bevorzugt in Form von Haferschälkleie) strukturgebend wirken.

Die Zugabe der Zusatzstoffe hat folgende Vorteile:
- Erzielung einer höheren Wasserspeicherkapazität von Pflanzensubstraten (wie Blumenerden etc.), und/oder
- Reduzierung des Torfgehalts von Pflanzensubstraten (wie Blumenerden etc.), und/oder
- Verbesserung der Qualität von Pflanzensubstraten (wie Blumenerden etc.), und/oder
- Reduzierung des Gewichts von Pflanzensubstraten (wie Blumenerden etc.).

In einer Ausführungsform werden Zellstoff und/oder Haferkleie im Bereich von 5 bis 50 Vol.-% bezogen auf das Gesamtvolumen zugegeben, beispielsweise 10 bis 30 Vol.-% oder 10 bis 30 Vol.-% oder 10 bis 35 Vol.-%.

Die Zugabe von Zellstoff, Haferkleie bzw. von beiden in Kombination, erfolgt vorzugsweise in bestimmten dosierten Bereichen. In einer Ausführungsform erfolgt die Zugabe im Bereich von 5 bis 50 Vol.-% und Unterbereichen darin, beispielsweise 10 bis 30 Vol.-% oder 10 bis 35 Vol.-% jeweils bezogen auf das Volumen der gesamten Zusammensetzung.

In einer Ausführungsform erfolgt der Einsatz der erfindungsgemäßen Zusatzstoffe bei Pflanzensubstraten, die frei von Torf sind.

Bevorzugt sind die Pflanzensubstrate im Wesentlichen frei von Torf.

"Im Wesentlichen frei von Torf, wie hierin verwendet, bezieht sich auf einen Torfgehalt von etwa 5 bis 10 Vol.-% bezogen auf das Gesamtvolumen.

### Erfindungsgemäßes Verfahren

Die Aufgabe wird erfindungsgemäß durch ein Verfahren zur Herstellung von Pflanzensubstraten gelöst.

Das erfindungsgemäße Verfahren umfasst den Schritt
(1) Bereitstellen der Ausgangsstoffe des Pflanzensubstrats.
   Die Pflanzensubstrate sind bevorzugt Erden, Blumenerden, Komposte oder Spezialerden.
   Die Ausgangs- oder Rohstoffe des Pflanzensubstrats richten sich danach, welches Pflanzensubstrat hergestellt werden soll.
   Dabei kann es sich um Rindenhumus, Kompost, Holzfasern, Kokosgries, Torf, Kalk, Düngemittel handeln.
   Das erfindungsgemäße Verfahren umfasst weiterhin den Schritt
(2) Zugabe von Zellstoff durch Einblasen des Zellstoffs zu den Ausgangsstoffen bereitgestellt in Schritt (1), bevorzugt in eine vermahlene Mischung der Ausgangsstoffe, während des Zerkleinerungs- bzw. Mahlschrittes,
   und umfasst weiterhin den Schritt:
(3) Zugabe von Haferkleie.

In einer bevorzugten Ausführungsform werden die Ausgangs- oder Rohstoffe dosiert zusammengeführt und vermischt. Nach dem Vermischen werden die Komponenten gemahlen. Direkt in die Mühle wird der Zellstoff eingeblasen und/oder die Haferkleie dazu dosiert. Der Mühlendurchlauf stellt eine definierte Struktur sicher und sorgt für eine absolute Vermischung aller Komponenten.

Das erfindungsgemäße Verfahren umfasst die Schritte (1), (2) und (3).

Bevorzugt wird der Zellstoff in Form von Zellstofffasern verwendet.

Bevorzugt wird der Zellstoff aus Recycling-Material verwendet, weiter bevorzugt aus aufbereitetem Altpapier oder nicht bedrucktem Zeitungspapier.

Bevorzugt wird der Zellstoff aus Frischholz, wie aus Holzfasern, verwendet.

Wie oben diskutiert, kann der Zellstoff, insbesondere die Zellstofffasern, aus aufbereitetem Altpapier gewonnen werden. Der so gewonnene Zellstoff bzw. die so gewonnenen Zellstoffasern weisen kurze Fasern im Bereich von einigen wenigen Mikrometern bis in den Submillimeterbereich auf. Dies hat zur Folge, dass dieses Material zum Verklumpen neigt, insbesondere beim Aussetzen gegenüber Feuchtigkeit. Erfindungsgemäß wird dieses Zellstoffmaterial in Pflanzensubstraten verwendet, um u.a. eine verbesserte Feuchtigkeitsspeicherkapazität zu erzielen.

Die Feuchtigkeitsspeicherkapazität ist besser gewährleistet, je langfaseriger das verwendete Zellstoffmaterial sei. Nur dann kann gewährleistet werden, dass zwischen den Fasern genügend Zwischenräume und damit eine gewisse "Luftigkeit" erzielt wird, in der Feuchtigkeit gespeichert werden kann. Bei der Vermischung des Zellstoffs mit den Pflanzensubstraten ist die Vermischung umso schwieriger, je langfaseriger das Zellstoffmaterial ist. Während also Zellstoffmaterial mit einer (erwünschten) Langfaserigkeit in der Länge von 2-3 mm, bisweilen sogar bis 5 mm zur gewünschten Speicherkapazität für Feuchtigkeit führt, sind solche Zellstoffmaterialien umso schwieriger zu verarbeiten, da insbesondere ihre Mischbarkeit mit anderen Materialien durch die Länge der Fasern kompromittiert wird.

Erfindungsgemäß wird der Zellstoff im Rahmen eines Zerkleinerungsschrittes in die Mischung eingeblasen und nicht einfach hinzugegeben. Dies ermöglicht eine weitestgehend homogene Verteilung des Zellstoffmaterials, was zu einer verbesserten Feuchtigkeitskapazität der resultierenden Pflanzensubstrate führt.

Das Einblasen erfolgt zum Beispiel in eine Hammermühle, damit sich das Zellstoffmaterial gleichmäßig mit allen weiteren Rohstoffen vermischt und somit verhindert werden kann, dass sich Zellstoffklumpen bilden.

Bevorzugt wird die Haferkleie in Form von Haferschälkleie verwendet.

Weiterbevorzugt in Form von Haferschälkleie, die durch Zerreiben und/oder Zerkleinern aus Haferschälkleie-Pellets erhalten wird.

In einer Ausführungsform werden Zellstoff und/oder Haferkleie im Bereich von 5 bis 50 Vol.-% bezogen auf das Gesamtvolumen zugegeben, beispielsweise 10 bis 30 Vol.-% oder 10 bis 30 Vol.-% oder 10 bis 35 Vol.-%.

In einer Ausführungsform werden in Schritt (1) Ausgangs- bzw. Rohstoffe verwendet, die Im Wesentlichen frei von Torf sind.

"Im Wesentlichen frei von Torf, wie hierin verwendet, bezieht sich auf einen Torfgehalt von etwa 5 bis 10 Vol.-% bezogen auf das Gesamtvolumen.

### Erfindungsgemäße Pflanzensubstrate

Das Produkt des erfindungsgemäßen Verfahrens ist ein Pflanzensubstrat, erhalten durch ein erfindungsgemäßes Verfahren, gemäß den Ansprüchen.

Die Aufgabe wird erfindungsgemäß durch das Bereitstellen von Pflanzensubstrat, umfassend Haferkleie als Zuschlagsstoff oder Hauptbestandteil, gelöst.

In einer Ausführungsform umfasst das erfindungsgemäße Pflanzensubstrat Zellstoff und Haferkleie als Zuschlagsstoff oder Hauptbestandteil.

Das erfindungsgemäße Pflanzensubstrat ist eine Erde, eine Blumenerde, oder eine Spezialerde.

Bevorzugt sind die Blumenerden, Substrate, und Spezialerden im Wesentlichen frei von Torf.

Bevorzugt wird der Zellstoff in Form von Zellstofffasern verwendet.

Bevorzugt wird der Zellstoff aus Recycling-Material verwendet, weiter bevorzugt aus aufbereitetem Altpapier oder nicht bedrucktem Zeitungspapier.

Bevorzugt wird der Zellstoff aus Frischholz, wie aus Holzfasern, verwendet.

Bevorzugt wird die Haferkleie in Form von Haferschälkleie verwendet.

Weiterbevorzugt in Form von Haferschälkleie, die durch Zerreiben und/oder Zerkleinern aus Haferschälkleie-Pellets erhalten wird.

In einer Ausführungsform werden Zellstoff und/oder Haferkleie im Bereich von 5 bis 50 Vol.-% bezogen auf das Gesamtvolumen zugegeben, beispielsweise 10 bis 30 Vol.-% oder 10 bis 30 Vol.-% oder 10 bis 35 Vol.-%.

Bevorzugt sind die erfindungsgemäßen Pflanzensubstrate im Wesentlichen frei von Torf.

"Im Wesentlichen frei von Torf, wie hierin verwendet, bezieht sich auf einen Torfgehalt von etwa 5 bis 10 Vol.-% bezogen auf das Gesamtvolumen.

Die vorliegende Erfindung wird in der folgenden Figur und Beispielen weiter verdeutlicht, ohne jedoch darauf beschränkt zu sein.

### Figuren

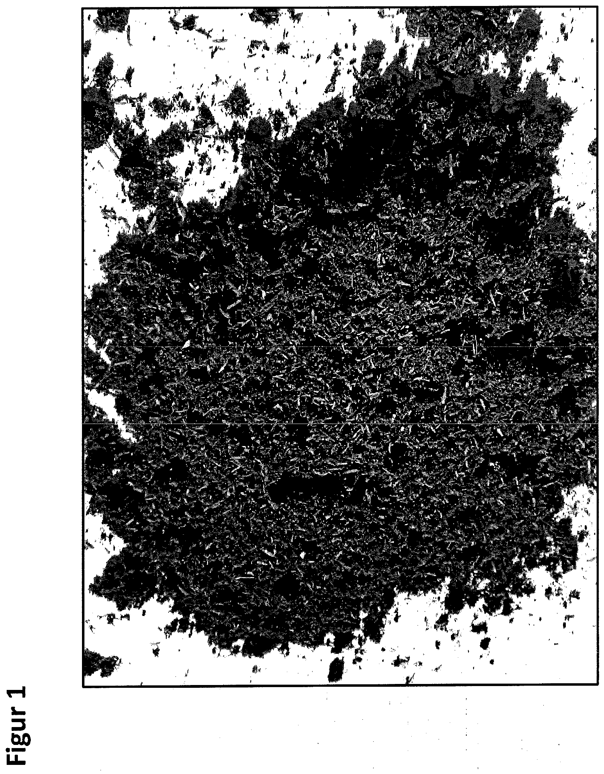

Figur 1 zeigt eine erfindungsgemäße Erde, die Haferkleie als Zusatzstoff enthält. Die Struktur der Erde wird durch die Haferkleie positiv beeinflusst.

### Beispiel

### 1. Verwendete Stoffe

### 1.1 Zellstoff

Der verwendete Zellstoff ist isofloc® LW (isofloc Wärmedämmtechnik GmbH, Lohfelden), der sich aus Fasern aus Zeitungspapier ≥ 95% zusammensetzt.

### 1.2 Haferkleie

Bei der verwendeten Haferkleie handelt es sich um Haferschälkleie-Pellets der Firma H. & J. Brüggen KG, Lübeck. Diese sind Pellets mit einem homogenen Durchmesser in variabler Länge und einer Restfeuchte von etwa 14%.

## Patentansprüche

1. Verwendung von Haferkleie als Zuschlagsstoff oder Hauptbestandteil von Pflanzensubstraten,
insbesondere Erden, Blumenerden, Komposten und Spezialerden.

2. Verwendung gemäß Anspruch 1, wobei Zellstoff und Haferkleie als Zuschlagsstoff oder Hauptbestandteil von Pflanzensubstraten verwendet werden, insbesondere Erden, Blumenerden, Komposten und Spezialerden.

3. Verwendung gemäß Anspruch 1 oder 2, wobei die Haferkleie in Form von Haferschälkleie verwendet wird,
bevorzugt in Form von Haferschälkleie, die durch Zerreiben und/oder Zerkleinern aus Haferschälkleie-Pellets erhalten wird.

4. Verwendung gemäß Anspruch 2 oder 3, wobei der Zellstoff in Form von Zellstofffasern verwendet wird,
bevorzugt aus Frischholz oder Recycling-Material, weiter bevorzugt aus aufbereitetem Altpapier.

5. Verwendung gemäß einem der Ansprüche 1 bis 4, wobei Zellstoff und/oder Haferkleie im Bereich von 5 bis 50 Vol.-% bezogen auf das Gesamtvolumen zugegeben werden, beispielsweise 10 bis 30 Vol.-% oder 10 bis 35 Vol.-%.

6. Verwendung gemäß einem der Ansprüche 1 bis 5, wobei die Pflanzensubstrate, insbesondere Erden, Blumenerden, Komposte und Spezialerden, einen Torfgehalt von 5 bis 10 Vol% aufweisen.

7. Verfahren zur Herstellung von Pflanzensubstrat, umfassend
(1) Bereitstellen der Ausgangsstoffe des Pflanzensubstrats, weiterhin umfassend den Schritt:
(2) Zugabe von Zellstoff durch Einblasen des Zellstoffs zu den Ausgangsstoffen bereitgestellt in Schritt (1), bevorzugt in eine vermahlene Mischung der Ausgangsstoffe, während des Zerkleinerungs- bzw. Mahlschrittes, und weiterhin umfassend den Schritt:
(3) Zugabe von Haferkleie,
wobei die Pflanzensubstrate bevorzugt Erden, Blumenerden, Komposte oder Spezialerden sind.

8. Verfahren gemäß Anspruch 7, wobei der Zellstoff in Form von Zellstofffasern verwendet wird,
bevorzugt aus Frischholz oder Recycling-Material, weiter bevorzugt aus aufbereitetem Altpapier.

9. Verfahren gemäß Anspruch 7 oder 8, wobei die Haferkleie in Form von Haferschälkleie verwendet wird,
bevorzugt in Form von Haferschälkleie, die durch Zerreiben und/oder Zerkleinern aus Haferschälkleie-Pellets erhalten wird.

10. Verfahren gemäß einem der Ansprüche 7 bis 9, wobei Zellstoff und/oder Haferkleie im Bereich von 5 bis 50 Vol.-% bezogen auf das Gesamtvolumen zugegeben werden, beispielsweise 10 bis 30 Vol.-% oder 10 bis 35 Vol.-%.

11. Pflanzensubstrat, umfassend Haferkleie als Zuschlagsstoff oder Hauptbestandteil, wobei das Pflanzensubstrat Erde, Blumenerde oder Spezialerde ist.

12. Pflanzensubstrat gemäß Anspruch 11, weiterhin umfassend Zellstoff als Zuschlagsstoff oder Hauptbestandteil.

13. Das Pflanzensubstrat gemäß Anspruch 12, wobei der Zellstoff in Form von Zellstofffasern verwendet wird,
bevorzugt aus Frischholz oder Recycling-Material, weiter bevorzugt aus aufbereitetem Altpapier.

14. Das Pflanzensubstrat gemäß einem der Ansprüche 11 bis 13, wobei die Haferkleie in Form von Haferschälkleie verwendet wird,
bevorzugt in Form von Haferschälkleie, die durch Zerreiben und/oder Zerkleinern aus Haferschälkleie-Pellets erhalten wird.

15. Das Pflanzensubstrat gemäß einem der Ansprüche 11 bis 14, wobei Haferkleie im Bereich von 5 bis 50 Vol.-% bezogen auf das Gesamtvolumen enthalten ist, beispielsweise 10 bis 30 Vol.-% oder 10 bis 35 Vol.-%.

16. Das Pflanzensubstrat gemäß einem der Ansprüche 11 bis 15, mit einem Torfgehalt von 5 bis 10 Vol%.

## Claims

1. Use of oat bran as an additive or main component of plant substrates,
in particular soils, potting soils, composts and special soils.

2. Use according to claim 1, wherein cellulose and oat bran are used as additive or main component of plant substrates,
in particular soils, potting soils, composts and special soils.

3. Use according to claim 1 or claim 2, wherein the oat bran is used in the form of oat hulls,
preferably in the form of oat hulls which are obtained by pulverization and/or comminution of oat hull pellets.

4. Use according to claim 2 or claim 3, wherein the cellulose is used in the form of cellulose fibres,
preferably produced from fresh wood or material for recycling, more preferably produced from processed waste paper.

5. Use according to one of claims 1 to 4, wherein in the range from 5 % to 50 % by volume with respect to the total volume, for example 10 % to 30 % by volume or 10 % to 35 % by volume, of cellulose and/or oat bran is added.

6. Use according to one of claims 1 to 5, wherein the plant substrates, in particular soils, potting soils, composts and special soils, have a peat content of 5 % to 10 % by volume.

7. A method for the manufacture of plant substrate, comprising
(1) providing the starting materials for the plant substrate,
further comprising the step of:
(2) adding cellulose by blowing the cellulose into the starting materials provided in step (1), preferably into a milled mixture of starting materials, during the comminution or milling steps,
and further comprising the step of:
(3) adding oat bran,
wherein the plant substrates are preferably soils, potting soils, composts or special soils.

8. The method according to claim 7, wherein the cellulose is used in the form of cellulose fibres,
preferably produced from fresh wood or material for recycling, more preferably produced from processed waste paper.

9. The method according to claim 7 or claim 8, wherein the oat bran is used in the form of oat hulls,
preferably in the form of oat hulls which are obtained by pulverization and/or comminution of oat hull pellets.

10. The method according to one of claims 7 to 9, wherein in the range from 5 % to 50 % by volume with respect to the total volume, for example 10 % to 30 % by volume or 10 % to 35 % by volume, of cellulose and/or oat bran is added.

11. A plant substrate comprising oat bran as an additive or main component,
wherein the plant substrate is soil, potting soil or special soil.

12. The plant substrate according to claim 11, further comprising cellulose as additive or main component.

13. The plant substrate according to claim 12, wherein the cellulose is used in the form of cellulose fibres,
preferably produced from fresh wood or material for recycling, more preferably produced from processed waste paper.

14. The plant substrate according to one of claims 11 to 13, wherein the oat bran is used in the form of oat hulls, preferably in the form of oat hulls which are obtained by pulverization and/or comminution of oat hull pellets.

15. The plant substrate according to one of claims 11 to 14, containing in the range from 5 % to 50 % by volume with respect to the total volume, for example 10 % to 30 % by volume or 10 % to 35 % by volume, of oat bran.

16. The plant substrate according to one of claims 11 to 15, with a peat content of 5 % to 10 % by volume.

## Revendications

1. Utilisation de son d'avoine en tant qu'additif ou composant principal de substrats végétaux, plus particulièrement des terres, des terreaux, des composts et des terres spéciales.

2. Utilisation selon la revendication 1, dans laquelle de la cellulose et du son d'avoine sont utilisés en tant qu'additifs ou composants principaux de substrats végétaux, plus particulièrement des terres, des terreaux, des composts et des terres spéciales.

3. Utilisation selon la revendication 1 ou 2, dans laquelle du son d'avoine est utilisé sous la forme de son d'avoine mondé, de préférence sous la forme de son d'avoine mondé obtenu par pilage et/ou broyage de granulés de son d'avoine mondé.

4. Utilisation selon la revendication 2 ou 3, dans laquelle de la cellulose est utilisée sous la forme de fibres de cellulose, de préférence de bois frais ou de matériau de recyclage, de préférence de déchets de papier traités.

5. Utilisation selon l'une des revendications 1 à 4, dans laquelle de la cellulose et/ou du son d'avoine est ajouté, avec une proportion de l'ordre de 5 à 50 % en volume par rapport au volume total, par exemple de 10 à 30 % en volume ou de 10 à 35 % en volume.

6. Utilisation selon l'une des revendications 1 à 5, dans laquelle les substrats végétaux, plus particulièrement les terres, les terreaux, les composts et les terres spéciales, présentent une teneur en tourbe de 5 à 10 % en volume.

7. Procédé de fabrication d'un substrat végétal, comprenant
(1) mise à disposition des matériaux de départ du substrat végétal,
comprenant en outre l'étape suivante :
(2) ajout de cellulose par soufflage de la cellulose dans les matériaux de départ mis à disposition à l'étape (1), de préférence dans un mélange moulu des matériaux de départ, pendant l'étape de broyage ou de mouture,
et comprenant en outre l'étape suivante :
(3) ajout de son d'avoine,
dans lequel les substrats végétaux sont de préférence des terres, des terreaux, des composts ou des terres spéciales.

8. Procédé selon la revendication 7, dans lequel la cellulose est utilisée sous la forme de fibres de cellulose,
de préférence en bois frais ou en matériau de recyclage, de préférence en déchets de papier traités.

9. Procédé selon la revendication 7 ou 8, dans lequel le son d'avoine est utilisé sous la forme de son d'avoine mondé,
de préférence sous la forme de son d'avoine mondé obtenu par pilage et/ou broyage de granulés de son d'avoine mondé.

10. Procédé selon l'une des revendications 7 à 9, dans lequel de la cellulose et/ou du son d'avoine sont ajoutés, avec une proportion de l'ordre de 5 à 50 % en volume par rapport au volume total, par exemple de 10 à 30 % en volume ou de 10 à 35 % en volume.

11. Substrat végétal comprenant du son d'avoine en tant qu'additif ou composant principal, dans lequel le substrat végétal est une terre, un terreau ou une terre spéciale.

12. Substrat végétal selon la revendication 11, comprenant en outre de la cellulose en tant qu'additif ou composant principal.

13. Substrat végétal selon la revendication 12, dans lequel la cellulose est utilisée sous la forme de fibres de cellulose,
de préférence en bois frais ou matériau de recyclage, de préférence en déchets de papier traités.

14. Substrat végétal selon l'une des revendications 11 à 13, dans lequel le son d'avoine est utilisé sous la forme de son d'avoine mondé,
de préférence sous la forme de son d'avoine mondé obtenu par pilage et/ou broyage de granulés de son d'avoine mondé.

15. Substrat végétal selon l'une des revendications 11 à 14, dans lequel du son d'avoine est ajouté, avec une proportion de l'ordre de 5 à 50 % en volume par rapport au volume total, par exemple de 10 à 30 % en volume ou de 10 à 35 % en volume.

16. Substrat végétal selon l'une des revendications 11 à 15, avec une teneur en tourbe de 5 à 10 % en volume.
